(19)

Europäisches
Patentamt
European
Patent Office
Office européen
des brevets

(11) **EP 2 404 682 B1**

(12) **EUROPEAN PATENT SPECIFICATION**

(45) Date of publication and mention
of the grant of the patent:
**15.10.2014 Bulletin 2014/42**

(51) Int Cl.:
***B21C 23/00*** *(2006.01)*      ***B21C 23/01*** *(2006.01)*
***B09B 3/00*** *(2006.01)*      ***B22F 8/00*** *(2006.01)*
***B23K 20/12*** *(2006.01)*

(21) Application number: **11173052.9**

(22) Date of filing: **07.07.2011**

(54) **A method for providing plastic zone extrusion**

Verfahren zum plastischen Strangpressen

Méthode d'extrusion plastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2010 US 362726 P**

(43) Date of publication of application:
**11.01.2012 Bulletin 2012/02**

(73) Proprietors:
• **Southwire Company, LLC
Carrollton, GA 30119-4400 (US)**
• **UT-Battelle, LLC
Oak Ridge, TN 37831-6258 (US)**

(72) Inventors:
• **Manchiraju, Venkata Kiran
Villa Rica, GA Georgia 30180 (US)**
• **Feng, Zhili
Knoxville, TN Tennessee 37934 (US)**

(74) Representative: **Ström & Gulliksson AB
P.O. Box 4188
203 13 Malmö (SE)**

(56) References cited:
**EP-A2- 1 162 283**      **WO-A1-99/58288**
**JP-A- 2003 181 430**      **JP-A- 2003 181 431**
**JP-A- 2009 107 019**      **US-A1- 2008 041 921**
**US-A1- 2009 258 232**      **US-B1- 7 311 135**

EP 2 404 682 B1

**Description**

BACKGROUND

Extrusion is a process used to create objects of a fixed cross-sectional profile. A material is pushed or drawn through a die of a desired cross-section. Because a material only encounters compressive and shear stresses, extrusion provides the ability to create objects having complex cross-sections.

A method according to the preamble of claim 1 is e.g. known from JP-A-2003181430.

SUMMARY

This Summary is provided to introduce a selection of concepts in a simplified form that are further described below in the Detailed Description. This Summary is not intended to identify key features or essential features of the claimed subject matter. Nor is this Summary intended to be used to limit the claimed subject matter's scope.

Plastic zone extrusion may be provided. First, stock may be placed in a chamber. Then frictional heat may be generated within the stock to heat the stock to a plastic zone of the stock in the chamber. The stock may then be extruded through an orifice in the chamber after the stock is at the plastic zone.

Both the foregoing general description and the following detailed description provide examples and are explanatory only. Accordingly, the foregoing general description and the following detailed description should not be considered to be restrictive. Further, features or variations may be provided in addition to those set forth herein. For example, embodiments may be directed to various feature combinations and sub-combinations described in the detailed description.

BRIEF DESCRIPTION OF THE DRAWINGS

The accompanying drawings, which are incorporated in and constitute a part of this disclosure, illustrate various embodiments of the present invention. In the drawings:

FIG. 1 shows an extrusion system;

FIG. 2 shows a friction extrusion system;

FIG. 3 shows a wire produced from machining chips;

FIG. 4 shows a dispersed discontinuous SiC particulate in aluminum 2618 alloy matrix;

FIG. 5 show a friction stir process;

FIG. 6 shows a cross-section view of FSP zone;

FIG. 7 shows a uniform dispersion of nano $Al_2O_3$ particles in a pure Al matrix by FSP;

FIG. 8 shows stages involved in making comparable final products from recyclable scraps for embodiments of the invention and the current technology involving melting, casting and rolling/extrusion;

FIG. 9 shows an example of final products manufactured via extrusion processes consistent with embodiments of the invention; and

FIG. 10 shows energy consumption for producing one million metric tons of products.

DETAILED DESCRIPTION

The following detailed description refers to the accompanying drawings. Wherever possible, the same reference numbers are used in the drawings and the following description to refer to the same or similar elements. While embodiments of the invention may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the invention.

For the U.S. domestic metal producers (steels, Al alloys, Ti alloys, for example), recycling scraped materials is of prominent importance for a number of reasons. First, there are great concerns on the environmental issues related to disposing the scraped metals as industrial wastes. There is also an issue of diminishing domestic natural mineral resources, in contrast to the abundance and continuing pileups of scraped metals produced over the years of industrialization. The primary driver may be in the economics. It may be far cheaper, faster, and more energy-efficient to recycle than to manufacture from ores. In addition, capital equipment costs may be low for recycling. For example, recycling aluminum may require only about 10% of the capital equipment costs of these for production from ore. Mini steel mills with EAF furnaces that mainly use scraps as feedstock may also be less expensive to construct than the large BOF based integrated mills.

The U.S. Department of Energy's Industrial Technology Program (ITP) conducted a series of studies looking into the energy consumptions in the most energy-intensive industry sectors. For both steel industry and aluminum industry - the two largest metal making industries in the U.S. - converting scraps into usable products have become the major source of production.

Since the 1960's, recycling aluminum scraps in the U.S. has steadily grown, both in terms of the tonnage, and the percentage of total production. In 2000, nearly half (48.5%) of the aluminum metal produced in the U.S. was from recycled material. Similar trend exists in steelmaking. Steel has become the most recycled material, with two-third of U.S. steel now produced from scrap. Over ten million cars are shredded annually and the shredder scrap from these cars is returned to the melt shops.

Melting the feedstock may be a major energy efficiency barrier in metal recycling. In general, melting and melt processing operations may be the most energy intense of all post-melting processes. Thermal energy may be used to heat the scrap from ambient temperature to well above the melting point. A considerable portion of the thermal energy may be consumed to overcome the latent heat of fusion associated with melting. The thermal efficiency of today's melting process may be also low. For steel, the best-practice energy usage of EAF steelmaking using 100 % scrap charge is about 6.7 MBtu/cast ton, about five times of the theoretical minimum energy. For aluminum, the ratio is 2.50 kWh/kg to 0.33 kWh/kg - the actual usage is about 7.6 times of the theoretical minimum value.

Recycling of scrap materials has become a major source and will play an even more important role in future production and manufacturing of industrial metals in the U.S. The shift to a recycling dominant metal-making market represents a fundamental change in the feedstock materials in the US. This shift also presents a window-of-opportunity to re-think how metals should be produced from recyclables with even greater energy efficiency, environmental benefits, and product quality.

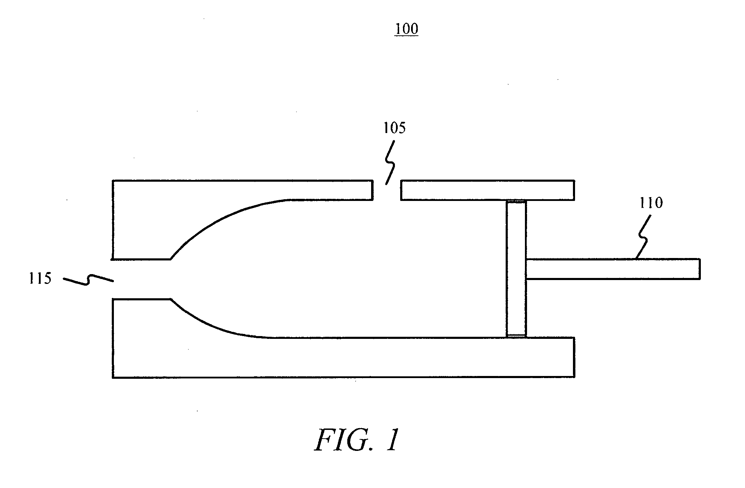

FIG. 1 shows a plastic zone extrusion system 100 consistent with embodiments of the invention for providing plastic zone extrusion. As shown in FIG. 1, plastic zone extrusion system 100 may include an inlet 105, a plunger 110, and an orifice 115. Consistent with embodiments on the invention, stock may be placed in inlet 105. Once plastic zone extrusion system 100 receives the stock, plunger 110 may compress the stock and force (e.g., extrude) the stock through orifice 115 in the form of a wire. For example, plunger 110 may turn the stock thus generating frictional heat. The generated frictional heat may heat the stock to a "plastic zone" of the stock. The plastic zone may comprise a solid state in which the stock is malleable, but not hot enough to be in a liquid or molten state. In other words, plastic zone extrusion system 100 may include a rotating die configured to generate heat by rotating the stock within plastic zone extrusion system 100. Once the generated heat places the stock in the stock's plastic zone, the stock may be extruded out orifice 115. The process may be continuously repeated by continuously adding stock into inlet 105 and continuously extruding wire out orifice 115 to construct a wire of any length.

The stock may comprise any material that may be placed in the stock's plastic zone by plastic zone extrusion system 100. For example, the stock may comprise aluminum, copper, or a combination. The stock, for example, may comprise shavings or swarf. Swarf may comprise metal shavings or chippings, for example, debris or waste resulting from metalworking operations. Swarf may be recycled, for example, due to the environmental concerns regarding potential contamination with liquids such as cutting fluid or tramp oil. These liquids may be separated from the metal using a centrifuge, thus allowing both to be reclaimed and prepared for further treatment.

Moreover, consistent with embodiments of the invention, the stock may comprise one metal, a plurality of any metals, or a combination of a metal or metals with another non-metal substance or substances. For example, the stock may comprise both copper and aluminum. With conventional systems, there may be a limit to the amount of molten copper that can mix homogeneously with molten aluminum. Consistent with embodiments of the present invention, the stock may include copper and aluminum in any percentage. Consequently, a wire may be constructed balancing aluminum's strength and light weigh with copper's conductivity. In other words, copper may be added to aluminum stock to increase the stocks conductivity.

The stock may also comprise any recycled or recyclable substance such as shredded aluminum cans. With conventional systems, recycled material, such as aluminum cans, must go through a "de-lacquering" process to remove substances from the recycled material. Consistent with embodiments of the invention, wire may be constructed using shredded aluminum cans that have not been de-lacquered thus avoiding costs associated with de-lacquering. While such wire may not have as high conductivity as stock that has been de-lacquered, this wire may be used in situations in which this is not an issue (e.g. fence wire).

Furthermore, according to the invention, nano-particles are added to the stock. For example, nano-particles of aluminum oxide may be added to aluminum stock to increase strength and conductivity of wire made with this stock. Notwithstanding, added nano-particles may add to the strength, conductivity, thermal expansion, or any physical or chemical property of wire made from stock with nano-particles added. With conventional systems, because material used to make wire has to be heated at least until it melts, any nano-particles added in conventional systems may not be stable (e.g. may lose their desired properties) at the temperature of molten metals.

A highly energy-efficient solid-state material synthesis process - a direct solid-state metal conversion (DSSMC) technology may be provided. Specifically, nano-particle dispersion strengthened bulk materials may be provided. Nano-composite materials from powders, chips, or other recyclable feedstock metals or scraps through mechanical alloying and thermo-mechanical processing may be provided in a single-step. Producing nano-engineered bulk materials with unique functional properties (e.g. thermal or electrical) may also be provided. Nano-engineered wires may be used in long-distance electric power delivery infrastructure.

Embodiments of the present invention may comprise a DSSMC system and method. These systems and methods may eliminate the need of melting (the most energy extensive step) during scrap-to-metal conversion/recycling process, thereby reducing the energy consumption and the cost of the metal making. Furthermore, since melting and solidification may be avoided, embodiments of the invention may open new pathways toward producing new classes of materials such as nano-engineered structural and functional materials by using, for example, mechanical alloying and processing. Embodiments of the present invention may use friction extrusion of metal recycling and friction stir processing of nano-particle strengthened surfaces.

Friction extrusion

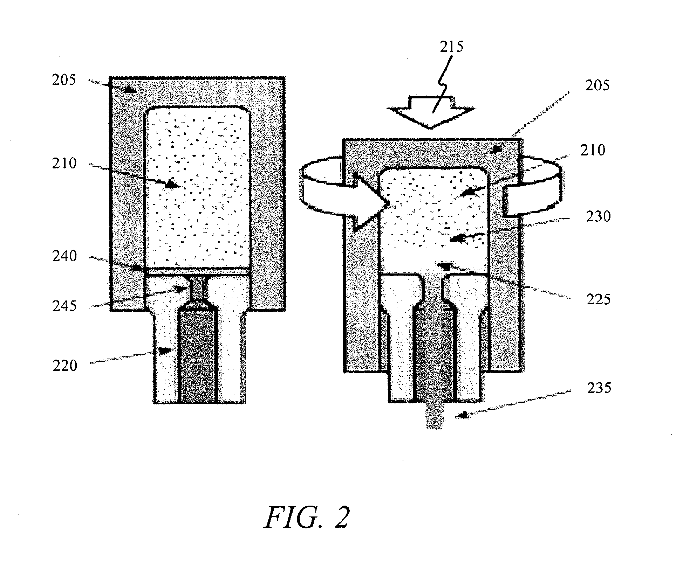

Friction extrusion may be a direct solid-state metal conversion process. Friction extrusion is shown in FIG. 2. A rotating chamber 205 filled with swarf 210 (e.g., machining chips or metallic powder) may be applied under axial load 215 onto a plunger 220 and extruded. Located between plunger 220 and swarf 210 may be a fusible plug 240. In addition, plunger 220 may include an orifice or die 245. The frictional heat and pressure caused by the relative motion and the initial restriction in the axial extrusion flow allow a plasticized layer 225 to form without the need for an external heat source. Considerable heat is generated by the high-strain rate plastic deformation in this layer that softens the material for mixing and consolidation. A relatively localized heat affected transition zone 230 may separate the plasticized layer from the compressed swaft 210 that may remain stagnant within chamber 205. With continued generation of plasticized layer 225 and progressive consumption of the swarf 210, a solid rod 235 may be hydrostatically extruded through die 245. From the energy consumption point of view, because considerable temperature rise may be restricted to thin plasticized layer 225, heat loss to the environment may be considerably lower than the heat loss of a heating furnace.

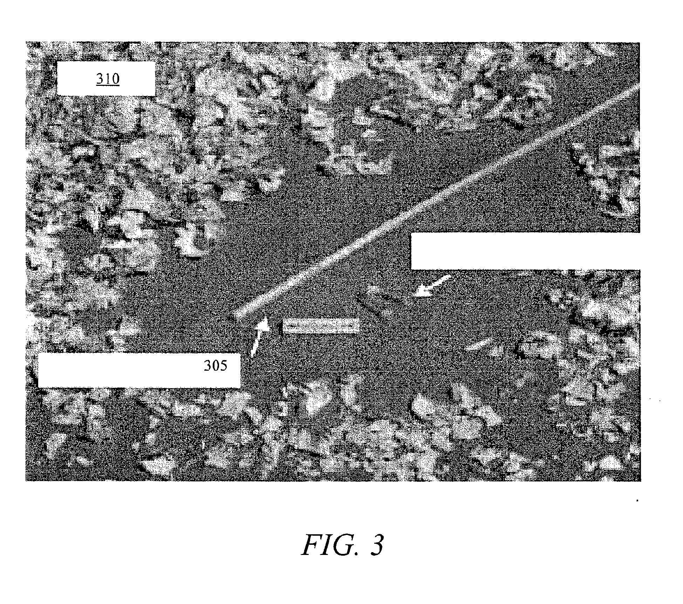

As shown in FIG. 3, a solid Al-Mg alloy wire 305 of over 3 mm in diameter and several meters long may be produced from, for example, machining chips 310. Good mechanical properties and greater than 99.8% densification (as measurement by density) may be achieved. Simple hand bend tests through 180° and tensile tests may demonstrate the integrity of the finished rod. Tensile test may achieve 130 MPa.

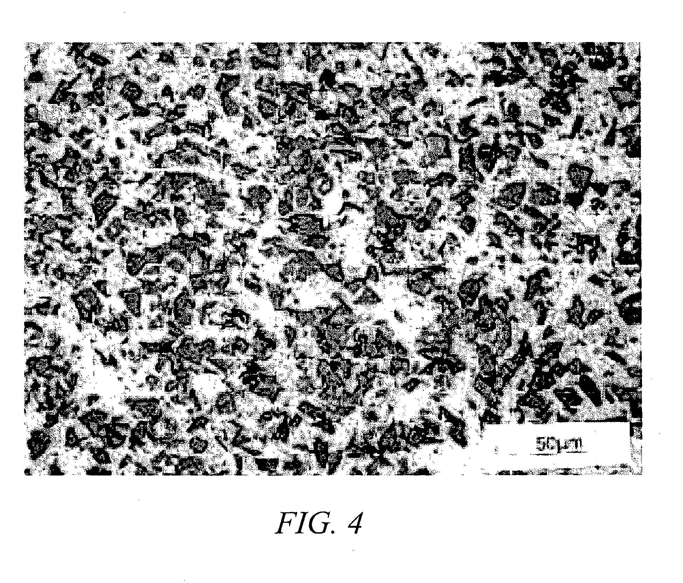

Consistent with embodiments of the invention, the extensive thermo-mechanical deformation may be to produce mechanically alloyed materials. Aluminum powder 2618 and 40% micron-sized silicon carbides may be used as the feedstock. Consistent with embodiments of the invention, most processed materials may be produced with reasonable appearance, consequently at least partial consolidation and conversion of the feedstock materials may be achieved. FIG. 4 shows the longitudinal section of a metal matrix composite bar made in trial runs. The dispersed discontinuous SiC particulates may be uniformed distributed in the aluminum 2618 alloy matrix.

Consistent with embodiments of the invention, the product from the friction extrusion may be a round wire/bar. However, other forms or shapes of products could be made through use of different die and plunger designs. Also, there may be no barrier limiting the size of the final products, if the process consistent with embodiments of the invention is scale up, for example, through additional hot extrusion/forming/rolling of the billet produced from multiple friction extrusion stations.

Friction Stir Processing

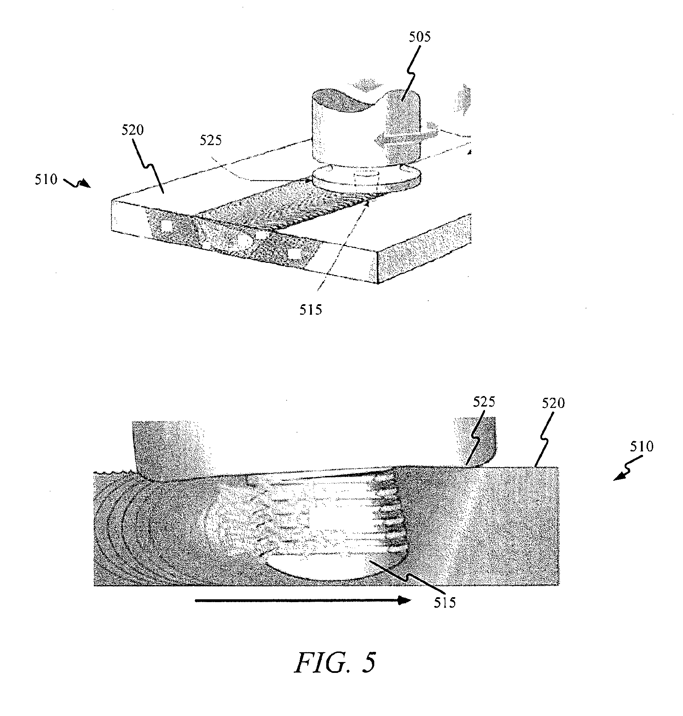

Consistent with embodiments of the invention, friction stir processing (FSP) may incorporate nano-sized oxide particles into Al matrix to form a mechanically alloyed hard and strong nanocomposite surface layer. FSP may comprise a variant of friction stir welding. In FSP (e.g., FIG. 5), a rotating tool 505 may be pushed against a workpiece 510 being processed such that a pin 515 of rotating tool 505 is buried in workpiece 510 and tool shoulder 525 is in full contact with a surface 520 of the workpiece. During processing, the temperature in a column of workpiece material under a tool shoulder 525 may be increased substantially, but below the melting point of the material, largely due to the frictional heating and high-strain rate deformation at the interface of the rotating tool 505 and workpiece 510. The increase in temperature may soften the material and allow the rotating tool 505 to mechanically stir the softened material toward the backside of pin 515 for consolidation and mechanical alloying. The high straining rate and the extensive material flow/deformation of FSP, which are not easily achievable in other thermo-mechanical deformation processes, may result in microstructures with unique or drastically improved properties.

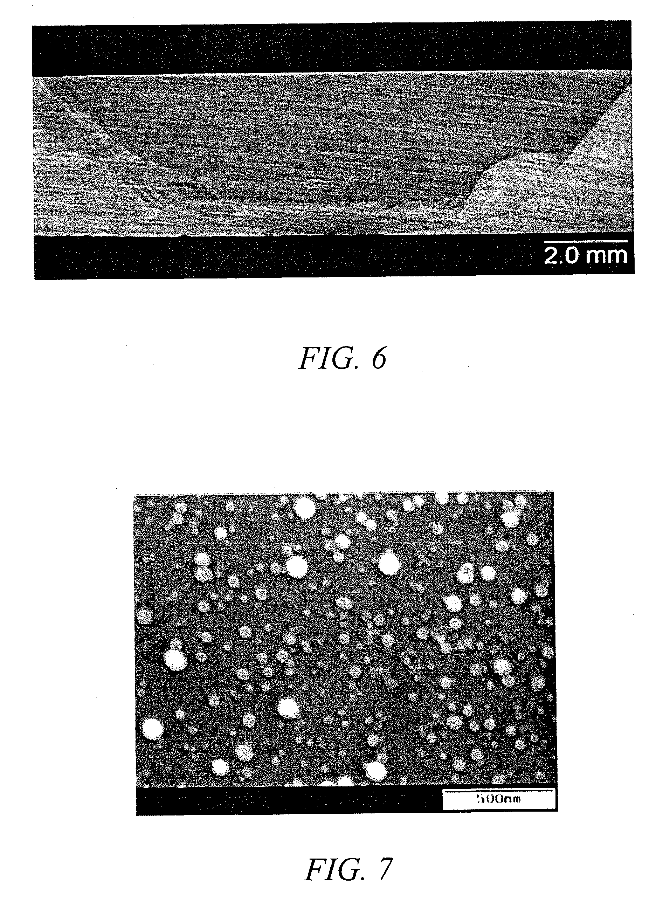

Consistent with embodiments of the invention, up to 20% volume fraction of nano-sized $Al_2O_3$ particles may be uniformly dispersed and mechanically alloyed with the Al matrix to form a nano-composite material with greatly increased strength. The Al- $Al_2O_3$ nano-composite may have over an order of magnitude higher compressive strength than that of baseline comparison metal. The wear resistance may be several orders of magnitude higher. FIG. 6 shows the cross-section of the friction stir processed Al- $Al_2O_3$ nano-composite surface layer, and the resulting uniform distribution of the nano oxide particles. FSP may have a surface modification technology not intended for bulk nano-material production. Consistent with embodiments of the invention, a high volume fraction of nano particles may be uniformly incorporated into bulk metal matrix by extensive thermo-mechanical deformation and mixing from friction stir action.

FIG. 7 shows a uniform dispersion of nano $Al_2O_3$ particles in pure Al matrix by FSP. The initial oxide particle size in FIG. 7 is approximately 50 nm.

Embodiments of the invention may provide a direct solid-state metal conversion process that includes: (1) metal recycling with greatly improved energy efficiency; and (2) synthesis of nano-engineered bulk materials with enhanced mechanical strength and other unique functional properties.

DSSMC consistent with embodiments of the invention may provide high energy efficiency including an over 80% energy reductions in DSSMC over conventional metal conversion/synthesis processes that involve metal melting. Actual energy savings in production could be even higher, due to, for example, the energy efficiency of the mechanical system over the thermal/melting system. DSSMC may be environmentally friendly due to recycling scraps and low energy consumption.

Since melting and solidification may be eliminated, DSSMC may be suitable for synthesis of high-performance structural materials and functional materials that relies on mechanical alloying principles. DSSMC may produce lightweight metal matrix composites for transportation systems, nano-engineered (nano-composite, and/or nano-crystalline) bulk materials for electricity infrastructure, and oxide dispersion strengthened (ODS) alloys for nuclear energy systems. It may also be used in the low-cost Ti process, as well as Ti based composite materials such as TiAl intermetallics and/or SiC-reinforced Ti alloys.

DSSMC may be a continuous process that may be much easier to scale-up for high-volume production of bulk nano-engineered materials, in comparison with the powder metallurgic (PM) + hot isostatic pressing (HIP) and other mechanically alloying or nano material synthesis processes.

- DSSMC may not be limited to wires or rods. Other shapes may be produced with proper design of the die and related process conditions.
- DSSMC may be deployed as a metal recycling process with much lower energy consumption, operational cost and equipment cost.
- The relevance and significance of DSSMC as a bulk nano-material synthesis technology is discussed further below.

Consistent with embodiments of the invention, engineering materials strengthened with nano-sized oxides and other ceramic particulate dispersoids may have some unique properties. For the same volume fraction, nano-sized particles may be much more effective than micron-sized particles in strengthening the material due to reduced inter-particle spacing and the Orowan hardening effect. Because the oxides and ceramic particles may be thermally stable and insoluble in the matrix, dispersion strengthened materials may retain their strength up to temperatures near the matrix melting point. Further, dispersion strengthening may not have the same limitation of precipitation strengthening that requires high solubility of solute atoms at high temperatures and specific nano phase forming thermodynamics and kinetics. Therefore, dispersion strengthening may lessen the compositional restrictions in alloy design - an important aspect in metal recycling as it may ease the requirement for metal sorting.

Dispersion strengthened materials may be produced in small quantity through mechanical-alloying power-metallurgy route that may be involved in HIP and multi-step hot rolling and annealing. Examples may include oxide dispersion strengthened (ODS) ferrous and non-ferrous alloys intended for next generation nuclear reactors and ultra high-temperature boiler applications. However, the PM+HIP process may be highly energy intensive and very costly to scale-up. Nano ceramic dispersion particles may be added to cast Al alloys and Mg alloys with considerable improvement in mechanical properties, especially high-temperature creep strength.

Although casting can produce large quantity of bulk materials, achieving uniform dispersion of nano-sized particles in the molten metal and subsequent solidified metal matrix may be difficult. Due to the low density and the van der Waals force effect, the nano-sized oxide particles may tend to agglomerate and float to the surface during metal casting. Attempts to apply external energy field such as ultrasonic energy to breakdown the agglomerates and mix the nano-particles uniformly in the molten metal have been experimented in laboratory with limited success.

DSSMC consistent with embodiments of the invention may provide an approach to produce nano-engineered materials. Uniform dispersion may be provided with much higher volume fraction (up to 20%) of nano-particles in a metal matrix. Friction extrusion shares the same deformation and metallurgical bonding principles with FSP and other widely used friction based solid-state joining processes. They all may rely on frictional heating and extreme thermo-mechanical process deformation to stir, mix, mechanically alloy, and metallurgically consolidate and synthesize the material together. Friction extrusion may offer a practical means to produce bulk materials utilizing the principle of friction stir consolidation.

Embodiments of the invention may provide:

- Different shaped products.
- Nano-engineered bulk materials (solid wires) via DSSMC.
- Co-recycling different types of Al alloys (such as 5xxx series with 6xxx series).

Although DSSMC may recycle and convert a variety of industrial metals, the analysis in this section will be limited to two type of metals: aluminum alloys and steels for which the widespread applications of the transformational DSSMC technology is expected to have highest energy, economic, environmental impacts. DSSMC may be applied to steel products especially on tool materials used for the dies and the plungers.

The analysis on the energy, economic, and environmental impacts from the application of the DSSMC technology may be divided into two parts. The first part describes the procedure, references and assumptions used in the analysis. The second part summarizes the analysis results.

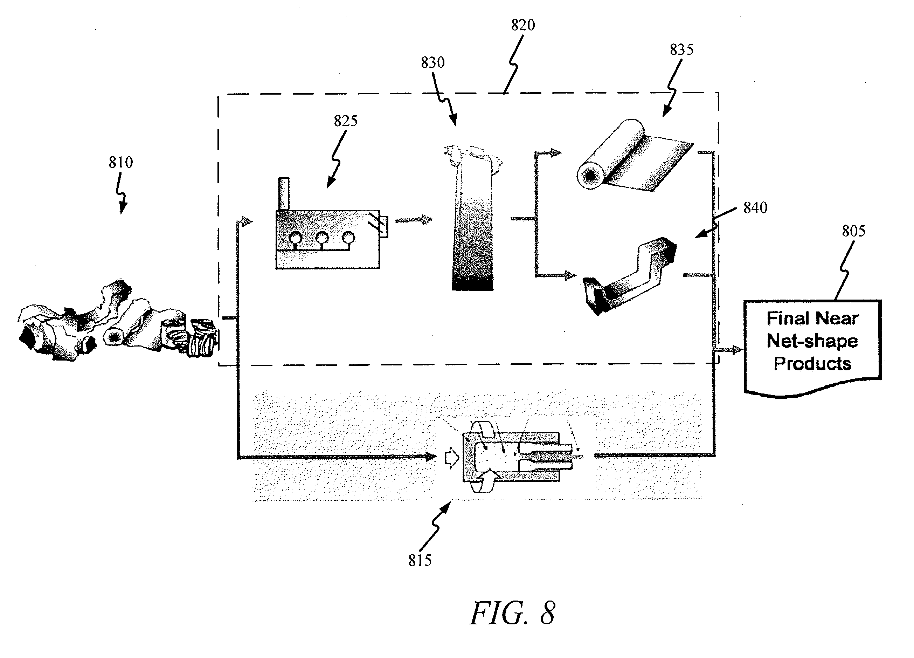

FIG. 8 shows the comparison of the basic operation steps of the current technologies and the new technologies for converting scraps to near net-shape products.

Current Baseline Technology

Secondary aluminum production - aluminum produced entirely from recycled aluminum scrap - is an example of as the current baseline technology (e.g. conventional.) Secondary aluminum production may comprise a number of major operations. The scraps are first melted in a furnace, cast into large ingot, billets, T-bar, slab or strip, and finally rolled, extruded or otherwise formed into the components and useful products. The secondary aluminum industry is a large market - currently, over 50% of the domestically produced Al products are made from aluminum scraps.

A mini steel mill may comprise a conventional system for steel production. The mini steel mill may comprise an electric arc furnace, billet continuous caster and rolling mill capable of making long products (bars, rod, sections, etc). The mini steel mill takes 100% scrap charge and makes bar and rod stocks as the final product. Therefore, both the input and output are the same in the direct conversion and the mini-mill steel converting processes.

The DSSMC process consistent with embodiments of the invention may produce near net-shape products from recyclable scraps in a single step, for the products described above by the current baseline technologies.

FIG. 8 shows steps involved in making comparable final products 805 from recyclable scraps 810 for embodiments of the invention 815 and the current technology 820. Current technology 820 may comprise a furnace 825 to melt recyclable scraps 810. The melted recyclable scraps may be cast 830 into ingots. The ingots then may be formed into the final products 805 via rolling 835 or extrusion 840.

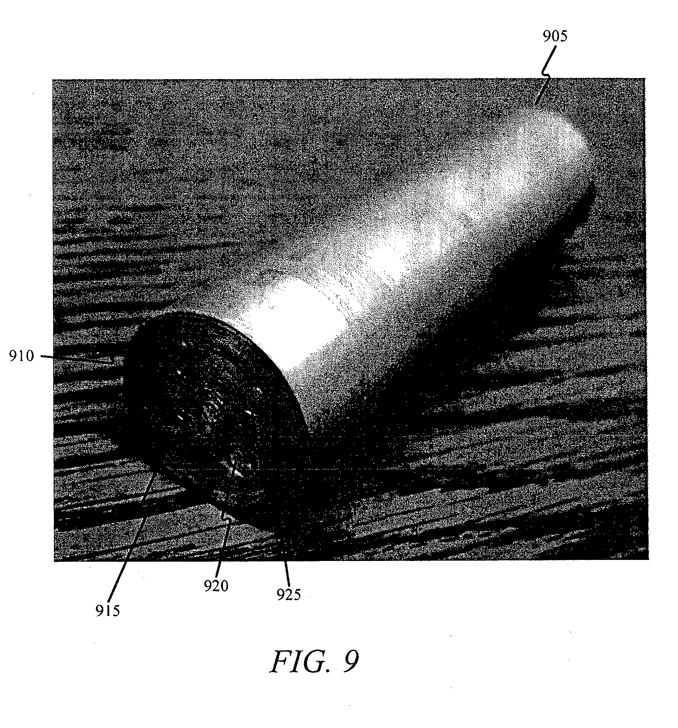

FIG. 9 shows an example of final products 805. Embodiments of the invention may be used to extrude complex objects. For example, FIG. 9 shows a cylindrical bar 905 having a first internal rod 910, a second internal rod 915, a third internal rod 920, and a fourth internal rod 925. During manufacturing, multiple chambers may be filled with swarf and multiple dies may be used to form cylindrical bar 905, first internal rod 910, second internal rod 915, third internal rod 920, and fourth internal rod 925. For instance, a first chamber may be filled with swarf and have a first die capable of extruding first internal rod 910, second internal rod 915, third internal rod 920, and fourth internal rod 925. A second chamber may be filled with swart, either of the same metal/alloy, or a different metal/alloy, and have a second die capable of extruding cylindrical bar 905. Consistent with embodiments of the invention, during a single extrusion both cylindrical bar 905 and first internal rod 910, second internal rod 915, third internal rod 920, and fourth internal rod 925 may be formed.

OPERATIONAL EXAMPLE

Analysis Procedure

Energy analysis may comprise two major steps. The first step may comprise determining the unit energy consumption for both the current baseline technology (conventional) and embodiments consistent with the invention. This included determination of the theoretical minimum energy requirements for both current and embodiments consistent with the invention, the actual average energy usage by U.S. industry for the current baseline technology, and the estimated energy usage for embodiments consistent with the invention. To ensure proper energy and environmental calculations, the "process energy" - the energy used at a process facility (the onsite energy) - may be determined. It does not include the energy losses incurred at offsite utilities (such as power generation and transmission loss).

In the second step, appropriate U.S. domestic Al and steel production figures may be obtained from available market survey. The unit energy usage data from the first step, together with the statistic annual production data from the second step, may be used as input to, for example, Energy Savings Calculation Tool (GPRA2004 Excel spreadsheet) from DOE ITP to determine the overall energy, economic and environmental benefits of the new technology.

UNIT ENERGY CONSUMPTION COMPARISON

ENERGY USAGE OF CURRENT BASELINE (CONVENTIONAL) TECHNOLOGY

The energy usage of the current baseline technology can be found from DOE reports. In general, a variety of fuels are used in different stages of Al or steel making. Choate and Green's study provides a detailed account of the energy used in aluminum recycling. According to this study, the energy usage for making final near net-shape product is:

$$\frac{Total\ Energy}{kg\ \text{AL}} = Ingot\ Casting + \frac{\left(2.75 * Hot\ Rolling + 2.75 * Cold\ Rolling + 1.72 * Extrusion\right)}{6.72}$$

In this equation, it is assumed that percentages of ingots used for rolling and extrusion are proportional to the annual rolling and extrusion production rates: 2.75 million metric tons for hot rolling, 2.75 million metric tons for cold rolling, and 1.72 million metric tons for extrusion. The actual energy consumptions for steel recycling (EAF furnaces in mini steel mills) are estimated in the similar fashion according to the study by Stubbles.

The average actual unit energy consumption figures are presented in Table 1, together with the theoretical minimum energy requirement for both current (conventional) and new technology (embodiments of the invention), and estimated energy usage for embodiments of the present invention. The theoretical minimum energy requirements were obtained from Choate and Green for aluminum, and Fruehan's study for steel.

Energy usage that may be used by embodiments of the invention

The unit energy consumption of embodiments of the invention, for example, is estimated below. In DSSMC process, friction may be used to drive the localized deformation and heating. Both the frictional heating and high-strain rate plastic deformation result in an increase in temperature of the processed region. Therefore, the energy input can be estimated from the temperature increase in the processing region. The minimum theoretical energy may be determined from adiabatic heating by plastic work:

$$\Delta H = \int_{T_2} C_P dT$$

where $C_p$ is the specific heat capacity of the material processed, and $T_2$ is the processing temperature. The processing temperature is assumed to be 450°C for aluminum alloys and 1300°C for steels, based on the typical hot forging temperatures of the materials. The average specific heat is 0.9 and 0.45 respectively for Al and Fe.

The energy efficiency of the new technology is assumed to be 50%. This figure is based on the fact that the new technology is primarily a mechanical deformation process. According to Choate and Green, the efficiency of electrical/hydraulic system for rolling and extrusion is 75%. A lower efficiency may be assumed to account for other uncounted energy losses of the new technology.

Energy reduction on unit product basis

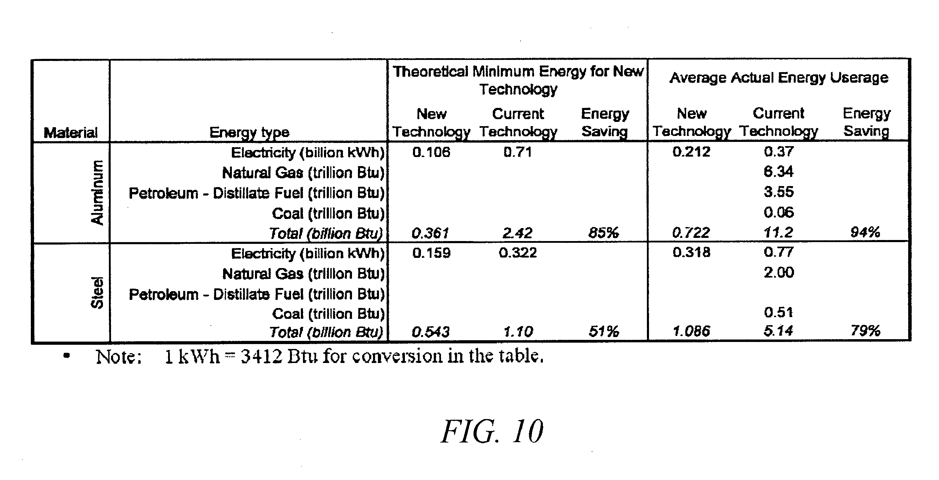

FIG. 10 shows the comparison of the energy consumption for producing one million metric tons of products using embodiments of the present invention and the current baseline technology. The energy usage was broken down according to the type of fuels used in the current Al and steel making (from 100% scraps), as different types of fuels have different environmental impact (such as CO2 emission). It may be assumed that the DSSMC process is an electric/hydraulic driven mechanical system that uses 100% electricity.

As shown in FIG. 10, the new technology (i.e., embodiments of the present invention) has enormous energy saving potential. The reduction of the theoretical minimum energy usage is 85% and 51 %, respectively for Al alloys and steels. Because of the energy inefficiencies of the current (i.e., conventional) technology, the estimated reductions of the actual energy usage are over 90% for aluminum and about 80% for steels. Similar energy savings may be achieved with the solid-state friction stir welding process.

While certain embodiments of the invention have been described, other embodiments may exist. While the specification includes examples, the invention's scope is indicated by the following claims. Furthermore, while the specification has been described in language specific to structural features and/or methodological acts, the claims are not limited to the features or acts described above. Rather, the specific features and acts described above are disclosed as example for embodiments of the invention.

## Claims

1. A method for providing plastic zone extrusion by means of a system comprising a chamber (205) defining a volume configured to contain the stock (210) and having an orifice (245); a plunger (220) sized to penetrate and mateably communicate within the chamber (205), and a motor operative to rotate at least one of the chamber (205) and the plunger (220), the method comprising:

   placing the stock (210) into the chamber (205),
   generating frictional heat within the stock (210) to heat the stock to a plastic zone (225) of the stock (210) in the chamber (205); and
   extruding, through the orifice (245) in the chamber (235), the stock (210) after the stock is at the plastic zone (225) **characterized in that** placing the stock (210) into the chamber (205) comprises adding nano-particles to the stock (210) by placing nano-particles into the chamber (205).

2. The method of claim 1, wherein placing stock (210) into the chamber (205) comprises placing swarf into the chamber.

3. The method of claim 3, wherein the nano-particles comprise at least one of the following: aluminum oxide, silicon carbide, copper, and carbon nano-tubes.

4. The method of claim 1, wherein generating the frictional heat within the stock comprises:

   rotating the orifice (245); and
   applying pressure to the stock (210).

5. The method of claim 1, wherein generating the frictional heat within the stock (210) comprises creating a plasticized layer (225) within the stock (210), the plasticized layer adjacent the orifice (245).

6. The method of claim 1, wherein the chamber (205) further comprises a die, and
   wherein the method further comprises the step of operating the motor to rotate only the chamber and the die.

7. The method of claim 1, wherein the plunger (220) further comprises a die, and
   wherein the method further comprises the step of operating the motor to rotate only the plunger and the die.

8. The method of claim 1, further comprising the step of providing a fusible plug (240) located between the plunger (220) and the stock (210) contained in the chamber (205).

## Patentansprüche

1. Verfahren zum Bereitstellen eines plastischen Zonenstrangpressens mittels eines Systems, das eine Kammer (205), die ein Volumen definiert, das konfiguriert ist, um den Vorrat (210) zu enthalten, und die eine Öffnung (245) aufweist; einen Kolben (220), der von einer Größe ist, um innerhalb der Kammer (205) einzudringen und zusammenpassend zu kommunizieren, und einen Motor, der betriebsfähig ist, um wenigstens eines der Kammer (205) und des Kolbens (220) zu drehen, umfasst, wobei das Verfahren umfasst:

   Anordnen des Vorrats (210) in der Kammer (205),
   Erzeugen von Reibungswärme innerhalb des Vorrats (210), um den Vorrat zu einer plastischen Zone (225) des Vorrats (210) in der Kammer (205) zu erwärmen; und
   Extrudieren, durch die Öffnung (245) in der Kammer (205), des Vorrats (210),
   nachdem der Vorrat an der plastischen Zone (225) ist,
   **dadurch gekennzeichnet, dass** das Anordnen des Vorrats (210) in der Kammer (205) ein Zufügen von Nanoteilchen zu dem Vorrat (210) durch Anordnen von Nanoteilchen in der Kammer (205) umfasst.

**2.** Verfahren nach Anspruch 1, wobei das Anordnen des Vorrats (210) in der Kammer (205) ein Anordnen von Spänen in der Kammer umfasst.

**3.** Verfahren nach Anspruch 3, wobei die Nanoteilchen wenigstens eines der folgenden umfassen: Aluminiumoxid, Siliciumcarbid, Kupfer und Kohlenstoffnanoröhrchen.

**4.** Verfahren nach Anspruch 1, wobei das Erzeugen der Reibungswärme innerhalb des Vorrats umfasst:

Drehen der Öffnung (245); und
Beaufschlagen von Druck auf den Vorrat (210).

**5.** Verfahren nach Anspruch 1, wobei das Erzeugen der Reibungswärme innerhalb des Vorrats (210) ein Erzeugen einer weichgemachten Schicht (225) innerhalb des Vorrats (210) umfasst, wobei die weichgemachte Schicht angrenzend an die Öffnung (245) ist.

**6.** Verfahren nach Anspruch 1, wobei die Kammer (205) ferner eine Düse umfasst, und wobei das Verfahren ferner den Schritt eines Betreibens des Motors umfasst, um lediglich die Kammer und die Düse zu drehen.

**7.** Verfahren nach Anspruch 1, wobei der Kolben (220) ferner eine Düse umfasst, und wobei das Verfahren ferner den Schritt eines Betreibens des Motors umfasst, um lediglich den Kolben und die Düse zu drehen.

**8.** Verfahren nach Anspruch 1, weiter umfassend den Schritt eines Bereitstellens eines schmelzbaren Pfropfens (240), der zwischen dem Kolben (220) und dem in der Kammer (205) enthaltenen Vorrat (210) angeordnet ist.

**Revendications**

**1.** Procédé de réalisation d'une extrusion en zone plastique, au moyen d'un système comprenant une chambre (205) définissant un volume, configurée pour contenir la charge (210) et dotée d'un orifice (245) ; un piston (220) dimensionné pour pénétrer et communiquer de manière adaptée dans la chambre (205) ; et un moteur opérationnel pour faire tourner au moins un parmi la chambre (205) et le piston (220) ; le procédé comprenant :

la mise en place de la charge (210) dans la chambre (205) ;
la génération d'une chaleur par frottement dans la charge (210) afin de chauffer la charge jusqu'à de la zone plastique (215) de la charge (210) dans la chambre (205) ; et
l'extrusion, à travers l'orifice (245) dans la chambre (205), de la charge (210), une fois que ladite charge se trouve au niveau de la zone plastique (225) ; **caractérisé en ce que** la mise en place de la charge (210) dans la chambre (205) comprend l'ajout de nanoparticules à ladite charge (210) par le placement des nanoparticules dans la chambre (205).

**2.** Procédé selon la revendication 1, dans lequel la mise en place de la charge (210) dans la chambre (205) comprend la mise en place de copeaux dans la chambre.

**3.** Procédé selon la revendication 3, dans lequel les nanoparticules comprennent au moins un des éléments suivants : oxyde d'aluminium, carbure de silicium, cuivre, et nanotubes de carbone.

**4.** Procédé selon la revendication 1, dans lequel la génération de la chaleur par frottement dans la charge comprend :

la mise en rotation de l'orifice (245) et
l'exercice d'une pression sur la charge (210).

**5.** Procédé selon la revendication 1, dans lequel la génération de la chaleur par frottement dans la charge (210) comprend la création d'une couche plastifiée (225) dans la charge (210) ; la couche plastifiée étant adjacente à l'orifice (245).

**6.** Procédé selon la revendication 1, dans lequel la chambre (205) comprend en outre une matrice, et dans lequel le procédé comprend en outre l'étape consistant à faire fonctionner le moteur afin de faire tourner uniquement la chambre et la matrice.

7. Procédé selon la revendication 1, dans lequel le piston (220) comprend en outre une matrice, et dans lequel le procédé comprend en outre l'étape consistant à faire fonctionner le moteur afin de faire tourner uniquement le piston et la matrice.

8. Procédé selon la revendication 1, comprenant en outre l'étape consistant à fournir un bouchon fusible (240) situé entre le piston (220) et la charge (210) contenue dans la chambre (205).

*FIG. 1*

*FIG. 2*

*FIG. 3*

FIG. 4

*FIG. 5*

*FIG. 6*

*FIG. 7*

FIG. 8

EP 2 404 682 B1

*FIG. 9*

| Material | Energy type | Theoretical Minimum Energy for New Technology | | | Average Actual Energy Userage | | |
|---|---|---|---|---|---|---|---|
| | | New Technology | Current Technology | Energy Saving | New Technology | Current Technology | Energy Saving |
| Aluminum | Electricity (billion kWh) | 0.106 | 0.71 | | 0.212 | 0.37 | |
| | Natural Gas (trillion Btu) | | | | | 6.34 | |
| | Petroleum - Distillate Fuel (trillion Btu) | | | | | 3.55 | |
| | Coal (trillion Btu) | | | | | 0.06 | |
| | *Total (billion Btu)* | *0.361* | *2.42* | *85%* | *0.722* | *11.2* | *94%* |
| Steel | Electricity (billion kWh) | 0.159 | 0.322 | | 0.318 | 0.77 | |
| | Natural Gas (trillion Btu) | | | | | 2.00 | |
| | Petroleum - Distillate Fuel (trillion Btu) | | | | | | |
| | Coal (trillion Btu) | | | | | 0.51 | |
| | *Total (billion Btu)* | *0.543* | *1.10* | *51%* | *1.086* | *5.14* | *79%* |

• Note: 1 kWh = 3412 Btu for conversion in the table.

*FIG. 10*

EP 2 404 682 B1

**EP 2 404 682 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003181430 A